# EUROPEAN PATENT SPECIFICATION

(11) **EP 0 380 695 B1**
(45) Date of publication and mention of the grant of the patent: **20.01.1993**
(21) Application number: 89908523.7
(22) Date of filing: 24.07.1989
(51) Int. Cl.: F01M 9/10, F01L 3/22, F01L 3/12, F02F 1/24

(54) **LUBRICATION DEVICE OF VALVE SEAT PORTION IN INTERNAL COMBUSTION ENGINE**
SCHMIERUNGSANORDNUNG DER VENTILBASIS IN VERBRENNUNGSMOTOREN
DISPOSITIF DE LUBRIFICATION DE SIEGE DE SOUPAPE DANS UN MOTEUR A COMBUSTION INTERNE

(30) Priority: 25.07.1988 JP 97298/88 U
(43) Date of publication of application: 08.08.1990
(73) Proprietor: KABUSHIKI KAISHA KOMATSU SEISAKUSHO, Minato-ku Tokyo 107 (JP)
(72) Inventor: SAITO, Masafumi Oyama Works, 400, Yokokura-Shinden Oyama-shi Toch400, (JP)
(74) Representative: Newstead, Michael John
(86) International application number: PCT/JP89/00736
(87) International publication number: WO 90/01108

(56) References cited:
- DE-A- 3 346 371
- GB-A- 1 330 032
- US-A- 3 446 313
- US-A- 4 169 488

## Description

This invention relates to a lubricating system of a valve seat of an internal combustion engine and in particular to a system for lubricating the valve seat of an intake or an exhaust valve of an internal combustion engine with which a valve head comes into close contact.

Generally, an intake and exhaust valve mechanism of an internal combustion engine employs so-called poppet valves. In order to minimise wear in a valve head which is located close to the wall of a combustion chamber, lubricating oil is fed to the valve seat to minimise wear in the valve seat surface. This has been effected by feeding lubricating oil to the valve seat by gravity through a small clearance between a valve stem and a valve guide retaining the stem.

In an internal combustion engine employing supercharger boosting of the feed pressure of an air-fuel mixture fed to engine cylinder, the boosted feed pressure of the air-fuel mixture is applied to the clearance between the valve stem of the valve and the valve guide in the direction from downstream to upstream of the clearance. Thus, lubricating oil fails to fall through the clearance in the direction from upstream to downstream so that the feed of lubricating oil to the valve seat is blocked, resulting in insufficient lubrication of the valve seat surface.

The head of the valve, when seated on the valve seat surface, receives the internal pressure in the engine cylinder so as to be minutely displaced whilst it is in contact with the valve seat surface. In this state, insufficient feed of lubricating oil to the valve seat surface permits wear to occur in both the head of the valve and the valve seat surface so as to damage the gas-tightness of the valve, which reduces the output of the internal combustion engine.

US-A-3 446 313 describes (see Figure 5) a lubricating system for a valve seat of a supercharged internal combustion engine in which lubricating oil is fed to a valve seat that is made with a seat ring. This seat ring is formed with an annular groove (27) along a circumferential direction of the seat ring. The surface of the seat ring is provided with a plurality of holes (28) readily containing the lubricating oil. A cylinder head (2) to which the seat ring is fastened is provided with an oil passage (22) for feeding lubricating oil to the annular groove (27), whereby the lubricating oil fed through the oil passage and the annular groove is contained in the valve seat surface of the seat ring provided with the plurality of holes to produce a lubricating oil film on the valve seat surface.

DE-A-3 346 371 discloses that the use of a porous material, readily containing lubricating oil, in order to lubricate a valve surface.

JP-U-56 507 11 discloses a lubricating system of a valve seat having the pre-characterising features of claims 1 and 2.

According to the present invention from one aspect, there is provided a lubricating system of a valve seat of an internal combustion engine comprising a seat ring with which a face of a poppet valve body contacts, an annular groove formed along a circumferential direction of an outer cylindrical surface of the seat ring and an oil passage provided in the cylinder head for feeding lubricating oil to the annular groove, lubricating oil being fed to the valve seat surface of the seat ring by way of the oil passage and the annular groove, the seat ring being separately formed from the cylinder head, a part only of the seat ring being made of a porous sintered metal readily containing the lubricating oil, characterised in that this part provides the valve seat surface on which the poppet valve body contacts and extends from the valve seat surface to the annular groove whereby lubricating oil supplied through the oil passage and the annular groove is contained in the valve seat surface made of the sintered metal so as to form a lubricating oil film on the valve seat surface.

According to the present invention from another aspect, there is provided a lubricating system of a valve seat of an internal combustion engine comprising a seat ring with which a face of a poppet valve body contacts, an annular groove formed along a circumferential direction of an outer cylindrical surface of the seat ring and an oil passage provided in the cylinder head for feeding lubricating oil to the annular groove, lubricating oil being fed to the valve seat surface of the seat ring by way of the oil passage and the annular groove, the seat ring being separately formed from the cylinder head, a part only of the seat ring being made of a porous sintered metal readily containing the lubricating oil, characterised in that this part provides the valve seat surface on which the poppet valve body contacts and in that a plurality of lubricating oil holes connecting between said part and the annular groove is provided, whereby lubricating oil supplied through the oil passage and the annular groove is contained in the valve seat surface made of the sintered metal so as to form a lubricating oil film on the valve seat surface.

For a better understanding of the invention and to show how the same may be carried into effect, reference will now be made, by way of example, to the accompanying drawings, in which:-
Figure 1 is a fragmentary sectional view of the main part of an engine cylinder head showing a first form of lubricating system of a valve seat, and
Figure 2 is a similar fragmentary sectional view of the main part of engine cylinder head showing a second form of lubricating system of a valve seat.

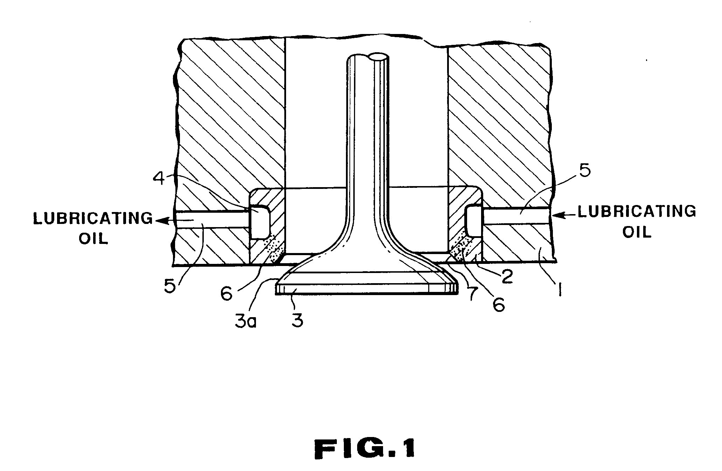

Referring first to Figure 1, a cylinder head 1 has a seat ring 2 fitted therewithin that provides the valve seat, i.e. a part of combustion chamber which a head 3a of a poppet type intake valve body 3 contacts. The outer cylindrical surface of the seat ring 2 is formed with an annular groove 4 along the outer circumference thereof. The annular groove 4 communicates with an oil passage 5 formed in the cylinder head 1.

The seat ring 2 is formed of a single material which has a mechanical strength sufficient for the valve seat and includes a porous metal structure in part. In particular, an annular part 6 (providing a valve seat surface 7 of the seat ring 2 on which the body 3 contacts and extending from the surface 7 to the annular groove 4) is of a porous sintered metal structure.

In accordance with the lubricating system of the valve seat, an oil pump or the like, not shown, forcibly feeds lubricating oil through a right-hand oil passage 5 of Figure 1 into the annular groove 4 formed in the seat ring 2. Then, lubricating oil circulates through the annular groove 4 to cool the seat ring 2 and returns through a left-hand oil passage 5 of Figure 1 to an oil pan, etc. A part of the lubricating oil forcibly fed to the annular groove 4 in the seat ring 2 penetrates the part 6 made of the porous metal structure to produce a lubricating oil film on the valve seat surface 7 of the seat ring 2.

Thus, in accordance with the lubricating system of the valve seat, since the lubricating oil forcibly fed to the annular groove 4 continuously produces a lubricating oil film on the valve seat surface 7 of the seat ring 2, the feed of lubricating oil to the vale seat surface 7 will not become insufficient, which minimises possible wear in both the valve head 3a and the valve seat 7 of the intake valve body 3. Thus, the gas-tightness of the intake valve will not be damaged, and therefore the output of the internal combustion engine will not be reduced.

In accordance with the embodiment described above, since the seat ring 2 is formed of a single material, the seat ring 2 has the mechanical strength sufficient for the valve seat and the part of it which is a porous sintered metal structure. However, the present invention is not restricted to the above embodiment. Alternatively, the annular porous sintered metal structure constituting the part 6 of the seat ring may be produced separately from and fastened to the rest of the seat ring 2.

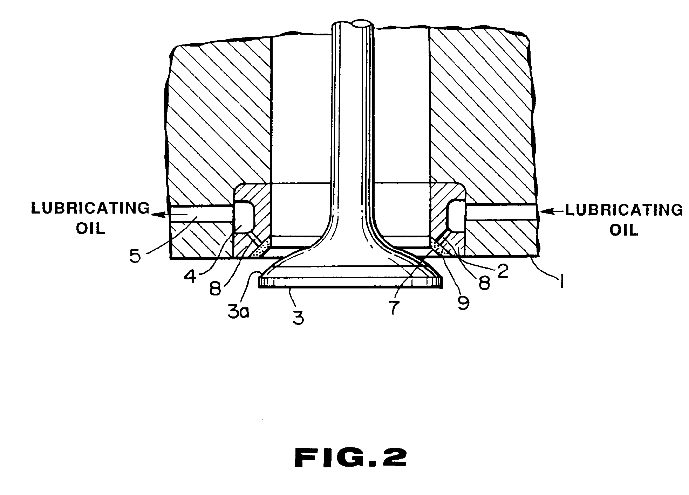

Referring now to Figure 2, in which the same parts as those of Figure 1 bear the same numerals, a part 9 of the seat ring 2 and providing the valve seat surface 7 of the seat ring 2 on which the body 3 contacts has a porous sintered metal structure which communicates through lubricating oil holes 8 with the annular groove 4.

In accordance with the lubricating system of the valve seat of the second embodiment, the oil pump or the like, not shown, forcibly feeds lubricating oil through the right-hand oil passage 5 of Figure 2 to the annular groove 4. Then, lubricating oil circulates through the annular groove 4 to cool the seat ring 2 and returns through a left-hand oil passage 5 of Figure 2 to the oil pan, etc. A part of the lubricating oil forcibly fed to the annular groove 4 in the seat ring 2 penetrates the porous metal structure of the part 9 through the lubricating oil holes 8 and is contained therein to produce a lubricating oil film on the valve seat surface 7 of the seat ring 2.

Thus, also in accordance with the second embodiment of Figure 2, since lubricating oil forcibly fed to the annular groove 4 continuously produces a lubricating oil film on the valve seat surface 7, the feed of lubricating oil to the valve seat surface 7 will not become insufficient, which minimises possible wear in both the valve head 3a and the valve seat surface 7 of the intake valve body 3. Thus, the gas-tightness of the intake valve will not be damaged, and therefore the output of internal combustion engine will not be reduced.

As described above, the outer cylindrical surface of the seat ring providing the valve seat is formed with the annular groove; at least a part providing the valve seat surface of the seat ring has a porous sintered metal structure; and lubricating oil is fed through the groove to the part having the porous metal structure to produce a lubricating oil film on the valve seat surface, so that when the valve head sits on the valve seat surface and when the valve head in a sitting position receives an internal pressure in the engine cylinder to deform, which causes a minute frictional displacement of the valve head, a possible metal-metal contact between the valve head and the valve seat surface is prevented, which prevents possible wear in both the valve head and the valve seat surface. Thus, the gas-tightness of the valve is retained, which prevents the internal combustion engine from a reduction in output. In addition, feeding lubricating oil to the annular groove formed in the outer cylindrical surface of the seat ring cools the seat ring, so that the mechanical strength of the valve is maintained to highly increase the reliability of the internal combustion engine.

## Claims

1. A lubricating system of a valve seat of an internal combustion engine comprising a seat ring (2) with which a face (3a) of a poppet valve body (3) contacts, an annular groove (4) formed along a circumferential direction of an outer cylindrical surface of the seat ring (2) and an oil passage (5) provided in the cylinder head (1) for feeding lubricating oil to the annular groove (4), lubricating oil being fed to the valve seat surface (7) of the seat ring (2) by way of the oil passage (5) and the annular groove (4), the seat ring (2) being separately formed from the cylinder head (1), a part (6) only of the seat ring (2) being made of a porous sintered metal readily containing the lubricating oil, characterised in that this part (6) provides the valve seat surface (7) on which the poppet valve body (3) contacts and extends from the valve seat surface (7) to the annular groove (4) whereby lubricating oil supplied through the oil passage (5) and the annular groove (4) is contained in the valve seat surface (7) made of the sintered metal so as to form a lubricating oil film on the valve seat surface (7).

2. A lubricating system of a valve seat of an internal combustion engine comprising a seat ring (2) with which a face (3a) of a poppet valve body (3) contacts, an annular groove (4) formed along a circumferential direction of an outer cylindrical surface of the seat ring (2) and an oil passage (5) provided in the cylinder head (1) for feeding lubricating oil to the annular groove (4), lubricating oil being fed to the valve seat surface (7) of the seat ring (2) by way of the oil passage (5) and the annular groove (4), the seat ring (2) being separately formed from the cylinder head (1), a part (9) only of the seat ring (2) being made of a porous sintered metal readily containing the lubricating oil, characterised in that this part (9) provides the valve seat surface (7) on which the poppet valve body (3) contacts and in that a plurality of lubricating oil holes (8) connecting between said part (9) and the annular groove (4) is provided, whereby lubricating oil supplied through the oil passage (5) and the annular groove (4) is contained in the valve seat surface (7) made of the sintered metal so as to form a lubricating oil film on the valve seat surface (7).

3. A lubricating system of a valve seat of an internal combustion engine as claimed in claim 1 or 2, wherein said seat ring (2) is an intake valve seat.

## Patentansprüche

1. Schmiersystem für den Ventilsitz eines Verbrennungsmotors, umfassend einen Sitzring (2), mit dem eine Fläche (3a) eines Ventiltellers (3) in Berührung kommt, eine Ringnut (4), die entlang der Umfangsrichtung einer äußeren zylindrischen Fläche des Sitzringes (2) ausgebildet ist, und einen Ölkanal (5), der im Zylinderkopf (1) angeordnet ist, um der Ringnut (4) Schmieröl zuzuführen, wobei das Schmieröl der Ventilsitzfläche (7) des Sitzringes (2) über den Ölkanal (5) und die Ringnut (4) zugeführt wird, wobei der Sitzring (2) vom Zylinderkopf (1) getrennt ausgebildet ist und nur ein Teil (6) des Sitzringes (2) aus einem porösen gesinterten Metall hergestellt ist, das das Schmieröl leicht aufnehmen kann, dadurch **gekennzeichnet**, daß dieses Teil (6) die Ventilsitzfläche (7) bildet, an der der Ventilteller (3) anliegt und sich von der Ventilsitzfläche (7) zu der Ringnut (4) erstreckt, wodurch von dem Ölkanal (5) und von der Ringnut (4) zugeführtes Schmieröl in der aus dem gesinterten Metall hergestellten Ventilsitzfläche (7) enthalten ist, um auf der Ventilsitzfläche (7) einen Schmierölfilm zu bilden.

2. Schmiersystem für den Ventilsitz eines Verbrennungsmotors, umfassend einen Sitzring (2), mit dem eine Fläche (3a) eines Ventiltellers (3) in Berührung kommt, eine Ringnut (4), die entlang der Umfangsrichtung einer äußeren zylindrischen Fläche des Sitzringes (2) ausgebildet ist, und einen Ölkanal (5), der im Zylinderkopf (1) angeordnet ist, um der Ringnut (4) Schmieröl zuzuführen, wobei das Schmieröl der Ventilsitzfläche (7) des Sitzringes (2) über den Ölkanal (5) und die Ringnut (4) zugeführt wird, wobei der Sitzring (2) vom Zylinderkopf (1) getrennt ausgebildet ist und nur ein Teil (9) des Sitzringes (2) aus einem porösen gesinterten Metall hergestellt ist, das das Schmieröl leicht aufnehmen kann, dadurch **gekennzeichnet**, daß dieses Teil (9) die Ventilsitzfläche (7) bildet, an der der Ventilteller (3) anliegt, und daß das Teil (9) über mehrere Schmierölbohrungen (8) mit der Ringnut (4) verbunden ist, wodurch von dem Ölkanal (5) und von der Ringnut (4) zugeführtes Schmieröl in der aus dem gesinterten Metall hergestellten Ventilsitzfläche (7) enthalten ist, um auf der Ventilsitzfläche (7) einen Schmierölfilm zu bilden.

3. Schmierölsystem für den Ventilsitz eines Verbrennungsmotors nach Anspruch 1 oder 2, wobei der Sitzring (2) ein Einlaßventilsitz ist.

## Revendications

1. Dispositif de lubrification de siège de soupape dans un moteur à combustion interne comprenant une bague (2) pour le siège, contre laquelle vient en contact la surface (3a) du corps d'une soupape (3) en champignon, une gorge annulaire (4) ménagée sur la circonférence de la surface cylindrique externe de la bague (2) et un passage (5) pour l'huile, ménagé dans la tête de cylindre (1) afin d'alimenter la gorge annulaire (4) en huile de lubrification, l'huile de lubrification étant amenée sur la surface (7) de la bague du siège (2) de la soupape par le passage (5) et la gorge annulaire (4), la bague (2) étant formée séparément de la tête de cylindre (1), une partie (6) seulement de la bague (2) étant constituée d'un métal fritté poreux contenant aisément l'huile de lubrification, caractérisé en ce que cette partie (6) comprend la surface (7) du siège de la soupape contre laquelle vient en contact le corps (3) de la soupape en champignon, et s'étend depuis la surface (7) du siège de la soupape vers la gorge annulaire (4), l'huile de lubrification amenée par le passage (5) et la gorge annulaire (4) étant contenue dans la surface (7) du siège de la soupape en métal fritté, de façon à former un film d'huile de lubrification sur la surface (7) du siège de la soupape.

2. Dispositif de lubrification de siège de soupape dans un moteur à combustion interne comprenant une bague (2) pour le siège contre laquelle vient en contact la surface (3a) du corps d'une soupape (3) en champignon, une gorge annulaire (4) ménagée sur la circonférence de la surface cylindrique externe de la bague (2) et un passage (5) pour l'huile, ménagé dans la tête de cylindre (1) afin d'alimenter la gorge annulaire (4) en huile de lubrification, l'huile de lubrification étant amenée sur la surface (7) de la bague du siège (2) de la soupape par le passage (5) et la gorge annulaire (4), la bague (2) étant formée séparément de la tête de cylindre (1), une partie (6) seulement de la bague (2) étant constituée d'un métal fritté poreux contenant aisément l'huile de lubrification, caractérisé en ce que cette partie (9) comprend la surface (7) du siège de la soupape contre laquelle vient en contact le corps (3) de la soupape en champignon et en ce qu'il est prévu une pluralité d'orifices (8) pour l'huile de lubrification entre cette partie (9), et la gorge annulaire (4), l'huile de lubrification amenée par le passage (5) et la gorge annulaire (4) étant contenue dans la surface (7) du siège de la soupape en métal fritté, de façon à former un film d'huile de lubrification sur la surface (7) du siège de la soupape.

3. Dispositif de lubrification de siège de soupape dans un moteur à combustion interne selon la revendication 1 ou 2, dans lequel la bague (2) pour le siège est un siège de soupape d'admission.
